# FASCICULE DE BREVET EUROPEEN

(11) **EP 4 147 867 B1**
(45) Date de publication et mention de la délivrance du brevet: **11.10.2023**
(21) Numéro de dépôt: 22193947.3
(22) Date de dépôt: 05.09.2022
(51) Int. Cl.: B32B 3/26, B32B 5/02, B32B 7/023, B32B 7/12, B32B 9/00, B32B 9/04, B32B 17/06, B32B 21/10, B32B 27/12, B32B 27/32, B32B 27/36

(54) **PIÈCE DE GARNITURE INTÉRIEURE AUTOMOBILE COMPORTANT UNE COUCHE D HABILLAGE ET SON PROCÉDÉ DE FABRICATION**
INNENVERKLEIDUNGSTEIL FÜR KRAFTFAHRZEUG MIT EINER VERKLEIDUNGSSCHICHT UND SEIN HERSTELLUNGSVERFAHREN
MOTOR VEHICLE INNER LINING PART COMPRISING A COVERING LAYER AND METHOD FOR MANUFACTURING SAME

(30) Priorité: 10.09.2021 FR 2109514
(43) Date de publication de la demande: 15.03.2023
(73) Titulaire: SMRC Automotive Holdings Netherlands B.V., 1101 BA Amsterdam (NL)
(72) Inventeur: CHOQUET, Alain, 59260 HELLEMMES-LILLE (FR); LECLERC, Eric, 59320 HAUBOURDIN (FR)
(74) Mandataire: Cabinet Nuss

(56) Documents cités:
- EP-A1- 3 587 103
- EP-A2- 2 060 443
- FR-A1- 3 096 301
- US-A1- 2002 101 738
- US-A1- 2019 275 934

## Description

La présente invention concerne le domaine du revêtement de surface de pièces structurelles, notamment l'habillage de pièces de garniture intérieure de véhicule automobile, comprenant un substrat ou corps support structurant, et a pour objets une telle pièce de garniture intérieure de véhicule comportant une couche d'habillage et son procédé de fabrication.

La présente invention s'inscrit notamment, mais non limitativement, dans la tendance actuelle visant, dans le cadre de l'équipement intérieur des véhicules, à habiller/décorer des surfaces avec des feuilles ou fines couches de matériaux naturels et à réaliser des effets de lumière par rétro-éclairage, à travers un complexe formé par un empilage de couches, intégrant en particulier une couche en un matériau naturel plus ou moins translucide.

Ces effets lumineux ont notamment pour but de faire apparaitre des décorations particulières, des messages, des logos et/ou des pictogrammes, de créer des halos lumineux, de réaliser un éclairage diffus ou encore de provoquer l'apparition de certaines commandes tactiles ou inductives à activer par l'utilisateur: ces effets lumineux variés étant visibles uniquement lorsque la source de lumière sous la pièce est activée et émet.

Ce concept plait aux utilisateurs et est attractif car il permet de présenter de larges surfaces à l'intérieur des véhicules dénuées de boutons et commandes, et aussi de provoquer des effets de surprise à l'apparition de l'effet lumineux, à un endroit neutre et a priori anodin (mais préférentiellement judicieusement choisi), ne laissant pas présager un tel effet, également appelé « secret till lit effect » (effet « secret jusqu'à éclairement »).

Par le document FR 3 096 301, on connait déjà une couche composite d'habillage destinée à recouvrir un substrat rigide, en particulier pour constituer une pièce de garniture intérieure de véhicule automobile, ladite couche composite comprenant une couche support en un textile tissé ou non-tissé, sur laquelle est rapportée une fine couche de matériau naturel organique ou minéral, la face apparente de cette dernière étant elle-même recouverte d'une couche de primaire d'adhésion et d'une couche de vernis, formant la couche superficielle. Ces couches élémentaires précitées qui forment par superposition la couche composite présentent toutes des matériaux constitutifs et des épaisseurs autorisant une transmission lumineuse plus ou moins efficiente à travers ladite couche composite. Un procédé d'habillage de pièces intérieures par une telle couche composite est également connu par ce document.

US 2019/275934 A1 divulgue une pièce de garniture intérieure de véhicule automobile, comprenant un substrat rigide formant le corps de ladite pièce et une couche composite d'habillage recouvrant ledit substrat pour former au moins la face apparente de ladite pièce, ladite couche composite comprenant au moins une couche support, et une fine couche translucide, assemblée ou laminée avec la couche support, les couches élémentaires précitées qui forment ensemble par superposition la couche composite autorisant une transmission lumineuse à travers ladite couche composite, en particulier pour la réalisation d'images lumineuses par rétroéclairage, apparentes à la surface de la couche de vernis. Le matériau du substrat et le matériau de la couche support sont de nature à bloquer la diffusion et la transmission de la lumière et en ce que ledit substrat et la couche support présentent des ouvertures traversantes formant par association concordante des passages de lumière, débouchant sur la fine couche translucide et dont les sections définissent les formes des éléments constitutifs de l'image lumineuse.

Les documents US 7 097 913, US2016/0121592, US2015/0343837 et GB 2 541 893 divulguent des réalisations plus ou moins similaires.

Toutefois, dans ces réalisations connues, le rétro-éclairage à travers plusieurs couches de matières plus ou moins transparentes ou translucides, éventuellement à travers des orifices ou des amincissements aménagés, occasionne des effets de diffraction du rayonnement lumineux, et un brouillage au niveau des bords ou limites. Les effets visuels générés sont donc généralement relativement ténus, avec des bords imprécis et brouillés, qui résultent en une délimitation de l'image affichée qui manque de netteté. Ainsi, ils ne permettent généralement pas l'affichage de signes, de pictogrammes ou de textes aisément reconnaissables ou lisibles. De plus, l'aspect visuel du matériau naturel n'est pas suffisamment mis en valeur, voire dégradé ou dénaturé, et elles n'autorisent aucune personnalisation du rendu.

La présente invention a notamment pour but de pallier au moins certains de ces inconvénients.

A cet effet, elle a pour objet une pièce de garniture intérieure de véhicule automobile, comprenant un substrat rigide formant le corps de ladite pièce et une couche composite d'habillage recouvrant ledit substrat pour former au moins la face apparente de ladite pièce, ladite couche composite comprenant au moins une couche support, préférentiellement sous forme de film ou de nature fibreuse, tel que par exemple un textile tissé, tricoté ou non-tissé, et une fine couche translucide de matériau naturel organique ou minéral, assemblée ou laminée avec la couche support, la face apparente de ladite fine couche translucide étant elle-même recouverte d'une couche de primaire d'adhésion et d'une couche de vernis, formant la couche superficielle, les couches élémentaires précitées qui forment ensemble par superposition la couche composite autorisant une transmission lumineuse à travers ladite couche composite, en particulier pour la réalisation d'images lumineuses par rétroéclairage, apparentes à la surface de la couche de vernis, cette pièce de garniture étant caractérisée en ce que le matériau du substrat et le matériau de la couche support sont de nature à bloquer la diffusion et la transmission de la lumière et en ce que ledit substrat et la couche support présentent des ouvertures traversantes formant par association concordante des passages de lumière, débouchant sur la fine couche translucide et dont les sections définissent les formes des éléments constitutifs de l'image lumineuse.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1] représente une vue en coupe schématique d'une partie d'une pièce de garniture intérieure selon l'invention ;
[Fig. 2] est une vue en perspective et à une autre échelle de l'objet de la figure 1, montrant l'affichage d'un groupe de lettres (SMRC), à titre d'image,
[Fig. 3] est une vue à une autre échelle d'un détail de la figure 1, montrant les différentes couches et les portions de passage correspondantes,
[Fig. 4] est une vue similaire à la figure 1, illustrant une variante de réalisation de la pièce selon l'invention, intégrant une source de lumière,
[Fig. 5] est une vue à une autre échelle d'un détail de la figure 4 ;
[Fig. 6A],
[Fig. 6B],

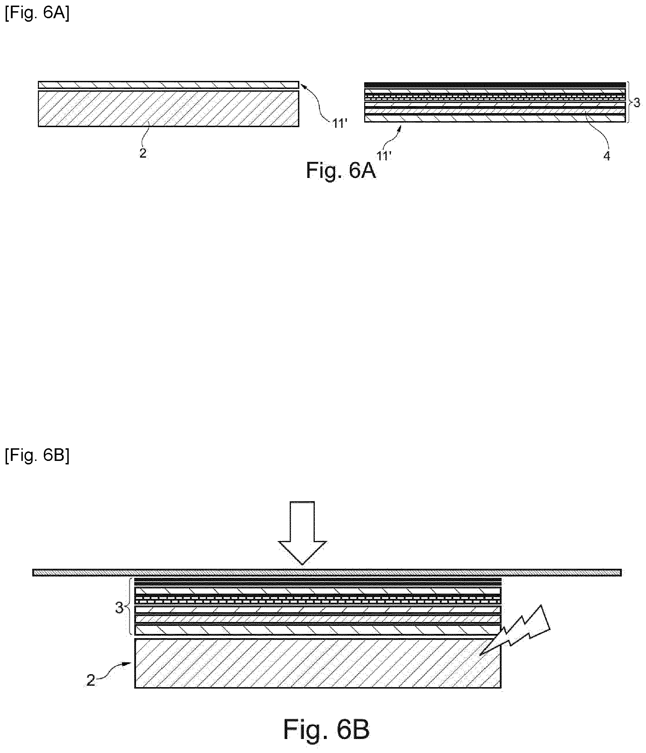

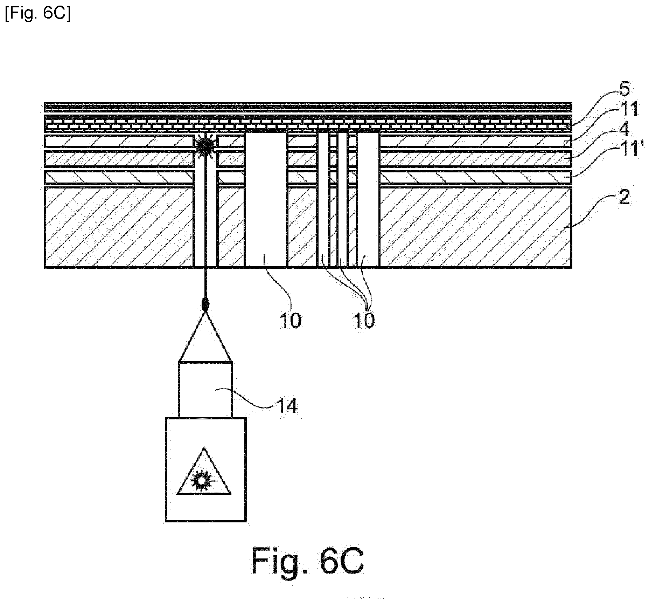

[Fig. 6C] et

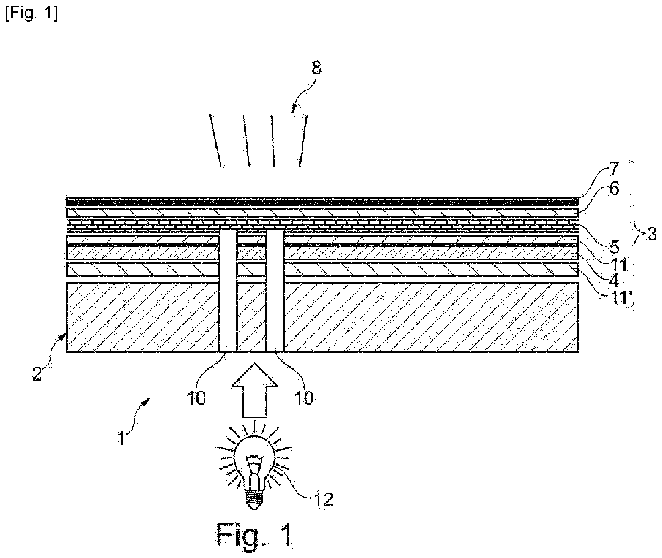

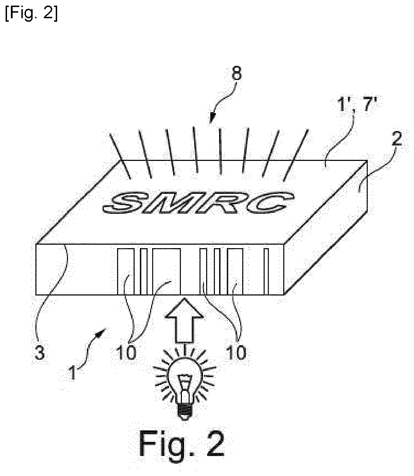

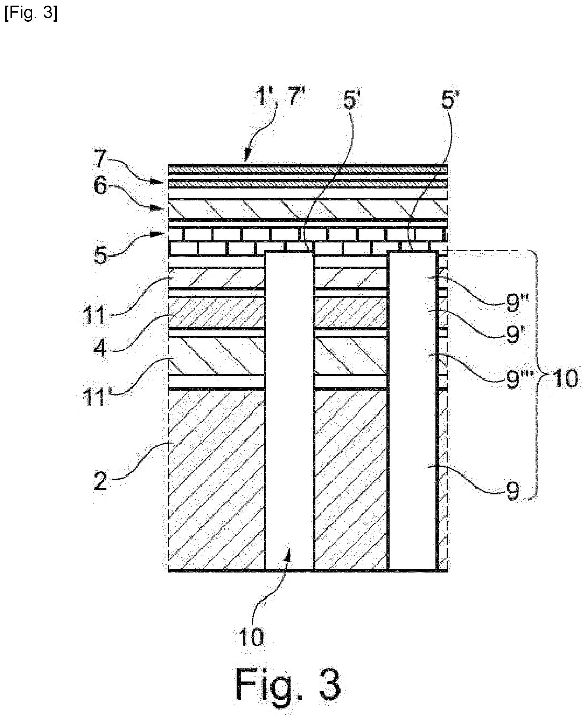

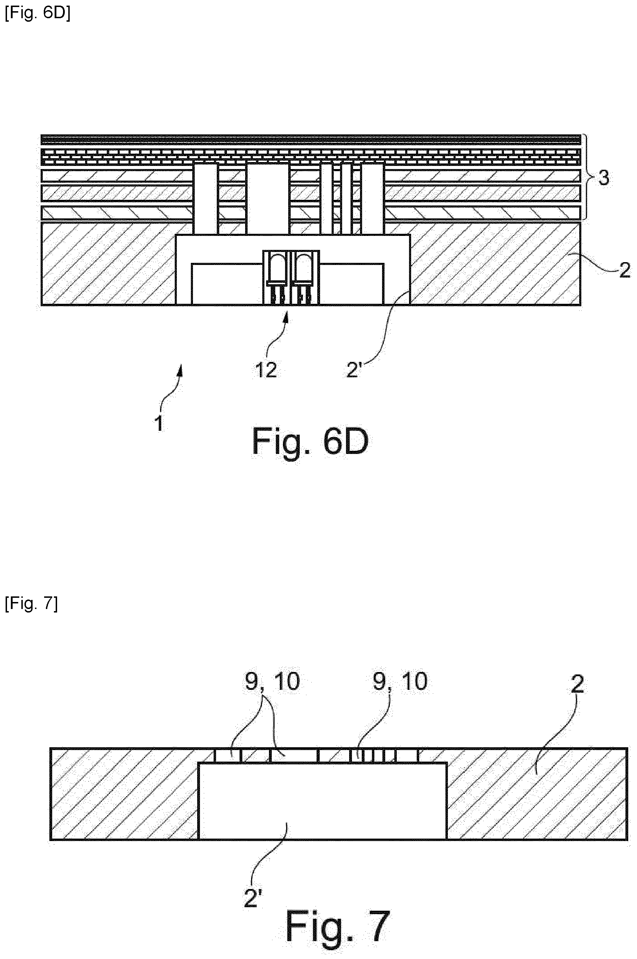

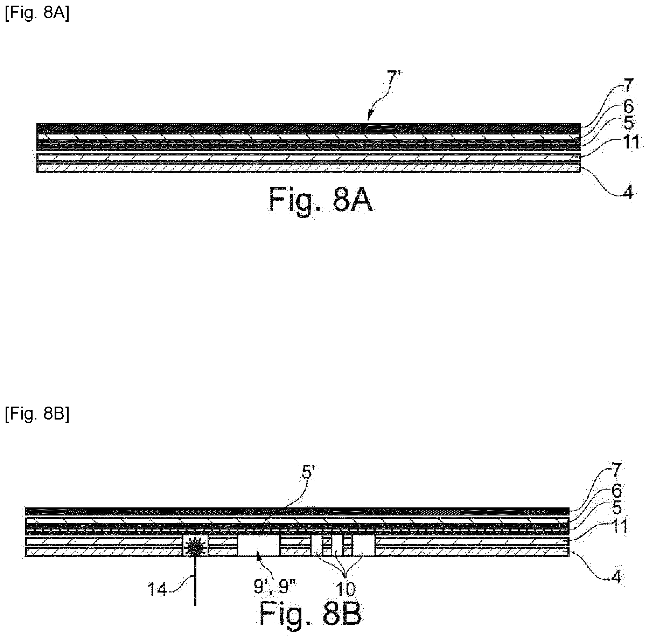

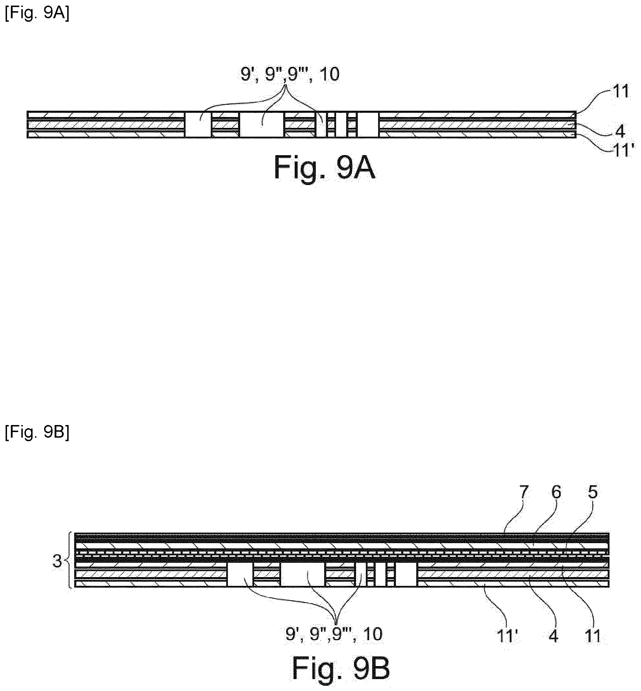

[Fig. 6D] sont des vues partielles en coupe illustrant des étapes de fabrication d'une pièce selon l'une des figures 1 à 5, en accord avec un premier mode de réalisation de l'invention ;
[Fig. 7],
[Fig. 8A],
[Fig. 8B],
[Fig. 9A],
[Fig. 9B],

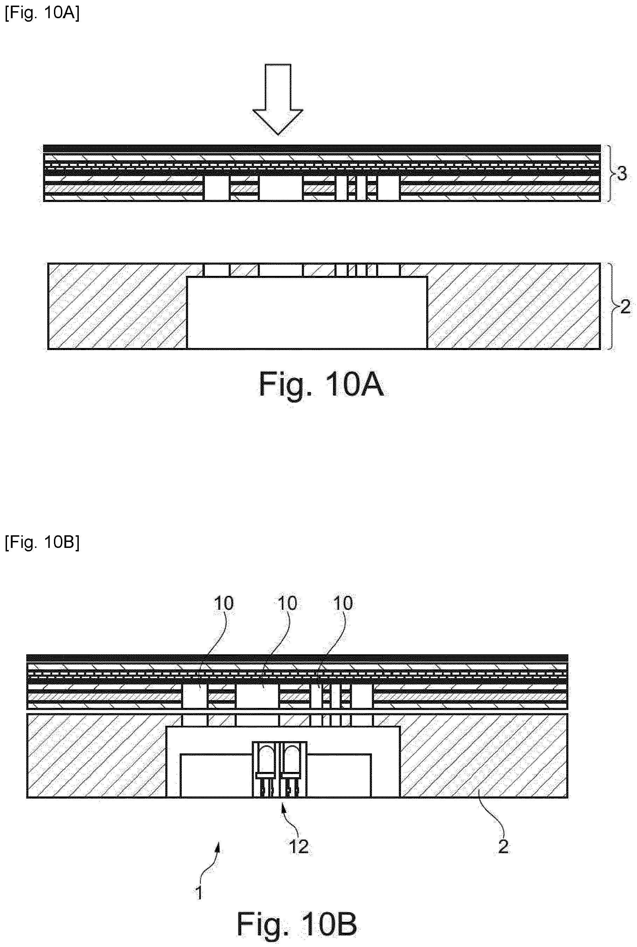

[Fig. 10A] et
[Fig. 10B] sont des vues partielles en coupe illustrant des étapes de fabrication d'une pièce selon l'une des figures 1 à 5, en accord avec un second mode de réalisation de l'invention, illustré en relation avec deux variantes de mise en oeuvre.

Les figures 1 à 5, 6D et 10B illustrent une pièce (1) de garniture intérieure de véhicule automobile, comprenant un substrat rigide (2) formant le corps de ladite pièce (1) et une couche composite d'habillage (3) recouvrant ledit substrat (2) pour former au moins la face apparente de ladite pièce (1). Cette couche composite (3) comprend au moins une couche support (4) , préférentiellement sous forme de film ou de nature fibreuse, tel que par exemple un textile tissé, tricoté ou non-tissé, et une fine couche translucide (5) de matériau naturel organique ou minéral, assemblée ou laminée avec la couche support (4), la face apparente (5') de ladite fine couche translucide (5) étant elle-même recouverte d'une couche (6) de primaire d'adhésion et d'une couche (7) de vernis, formant la couche superficielle de la couche composite (3) et de la pièce (1). Les couches élémentaires (4, 5, 6, 7) précitées qui forment ensemble par superposition la couche composite (3) sont choisies, agencées et configurées pour autoriser une transmission lumineuse à travers ladite couche composite (3), en particulier pour la réalisation d'images lumineuses (8) par rétroéclairage, apparentes à la surface de la couche de vernis (7).

Conformément à l'invention, le matériau du substrat (2) et le matériau de la couche support (4) sont de nature à bloquer la diffusion et la transmission de la lumière et ledit substrat (2) et la couche support (4) présentent des ouvertures traversantes (9, 9') formant par association concordante des passages de lumière (10), débouchant sur la fine couche translucide (5) et dont les sections définissent les formes des éléments constitutifs de l'image lumineuse (8).

Grâce à ces dispositions spécifiques, l'invention permet, d'une part, de transmettre une quantité de lumière suffisante jusqu'aux couches translucides (5 à 7) pour produire des images lumineuses (8) marquées et de grande luminosité en surface de la pièce (1) et, d'autre part, de fournir des contours d'images nets et précis.

En effet, la prévision de passages de lumière (10), associée aux choix spécifiques des matériaux constitutifs du substrat (2) et de la couche support (4), permet une transmission directe de la lumière depuis l'arrière du substrat (2) jusqu'à la fine couche de matériau naturel translucide (5), sans obstacle et sans perte par diffusion latérale dans ces matériaux. En outre, le contraste élevé en termes de luminosité et la précision de la délimitation des passages de lumière (10) entraine une définition nette du tracé des contours et bords des images lumineuses (8) formées en surface sur la face apparente (1') de la pièce (1), au-dessus desdits passages en cas de projection de lumière depuis la face arrière de la pièce (1). Pour des considérations de réalisation et d'efficacité, les passages de lumière (10) présentent une extension rectiligne et s'étendent préférentiellement selon une direction sensiblement perpendiculaire au plan de la face apparente (1') de la pièce (1) ou au plan tangent localement à cette face. De même, la lumière de rétroéclairage est avantageusement projetée dans lesdits passages selon cette direction.

Afin d'augmenter encore le cas échéant la luminosité des images (8), ainsi que leur netteté et leur contraste, il peut être prévu que la fine couche translucide (5) présente, au droit des passages de lumière (10), des zones (5') ayant subi une attaque surfacique au niveau de sa face d'envers, le cas échéant d'épaisseur de matière moindre, par exemple résultant d'une ablation localisée.

L'épaisseur de la couche (5) restante au niveau des zones (5') ayant subies une ablation partielle, sera toutefois suffisante pour garantir l'effet « secret jusqu'à éclairement », au niveau de la face apparente de la pièce (1). L'ablation à la forme des images (8) à afficher pourra notamment se faire avantageusement avec un laser (14), comme le montre la figure 6C, le rayon de ce dernier creusant le cas échéant les puits de lumière (10) de manière précise et nette, dans le substrat (2), la couche de support (4) et les couches de liaison (11, 11'), jusqu'à la couche de matériau naturel (5). Ce même laser pourra également creuser la cavité (2') dans un substrat (2) plein, pour la réception du module d'éclairage comprenant la source de lumière (12).

Selon une première caractéristique constructive additionnelle de l'invention, la fine couche translucide (5) est solidarisée surfaciquement avec la couche support (4) par l'intermédiaire d'une couche d'adhésion (11), et la couche support (4) est éventuellement solidarisée surfaciquement avec le substrat (2) par une autre couche d'adhésion (11'), cette couche ou ces deux couches d'adhésion étant de nature à bloquer la diffusion et la transmission de la lumière et comportant des ouvertures traversantes (9", 9'") concordantes participant également aux passages de lumière (10) en formant des parties de ces derniers.

Ainsi, ces couches de liaison (11, 11') ne font pas non plus obstacle à la transmission de lumière et ne donnent lieu à aucune perte par diffusion (notamment latérale dans les couches élémentaires de la couche d'habillage). Comme le montre la figure 6A, la couche de liaison (11') peut être rapportée soit sur le substrat (2), soit sur la sous-face de la couche de support (4).

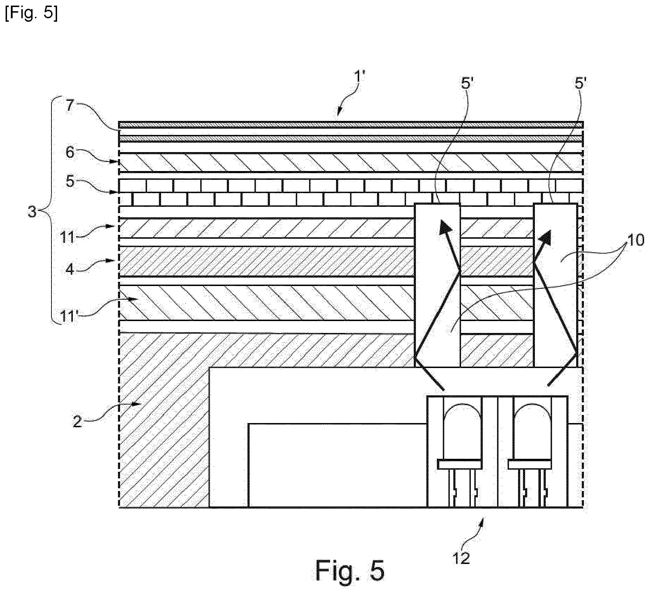

En accord avec une évolution favorable de l'invention, optimisant le rendu lumineux et ressortant plus particulièrement de la figure 5, il peut être prévu que les passages de lumière (10) présentent des surfaces internes, le cas échéant traitées ou revêtues de manière adaptée, favorisant la réflexion de la lumière, et avantageusement sa propagation et éventuellement sa focalisation en direction de la fine couche translucide (5).

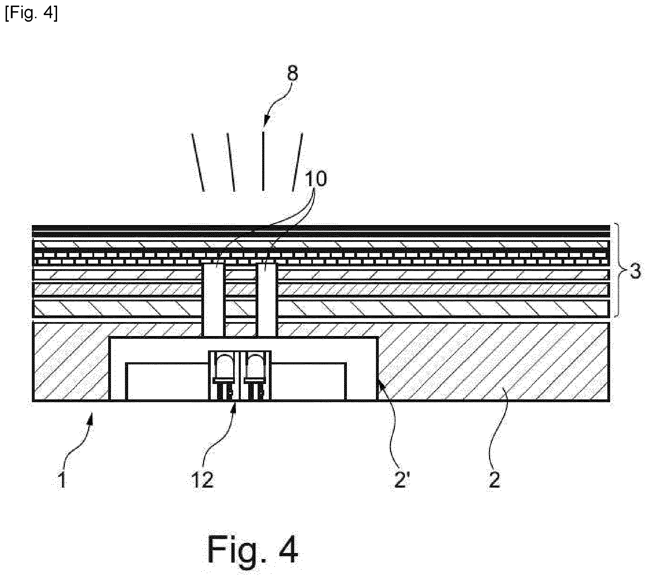

Préférentiellement, en vue de disposer d'une source lumineuse intégrée, et donc d'une pièce (1) formant module fonctionnel indépendant, et comme le montrent les figures 4, 5, 6D et 10B, la au moins une source de lumière (12) destinée à générer l'image lumineuse (8) par rétroéclairage est logée dans l'épaisseur du substrat (2) ou dans une cavité formée dans ce dernier, ladite source (12) étant préférentiellement choisie parmi les lampes laser, les dispositifs à LED et les fibres optiques. Dans le cas de mise en oeuvre de fibres optiques, la source lumineuse elle-même pourra éventuellement être déportée.

Dans toutes les variantes de réalisation de l'invention, le substrat (2) formant le corps support rigide de la pièce (1) est réalisé, par exemple par moulage par injection, en une matière opaque, par exemple un polypropylène ou alors un mélange du type PC/ABS, de couleur sombre (noir, gris foncé). La ou les sources de lumière (12) peuvent quant à elles être intégrées dans un module, monté dans une cavité adéquate (2') dudit substrat (2), comme le montrent les figures 4, 5, 6D et 10B.

En vue de personnaliser le rendu des effets lumineux, il peut être avantageusement prévu que la couche de primaire (6) et/ou la couche de vernis (7) intègre(nt) une teinture, des pigments ou une substance colorante analogue.

La teinture intégrée dans la couche de primaire (6) et/ou la couche de vernis (7), préférentiellement uniquement dans la couche de vernis transparent superficielle (7), peut présenter soit une coloration correspondant ou similaire à la teinte du matériau naturel de la couche translucide (5), soit une coloration différente de cette teinte, ce en fonction de l'effet souhaité et/ou au choix du client par exemple. Il est ainsi possible, au choix, visuellement soit de conserver la coloration et l'aspect naturel de la couche (5), soit d'imposer une coloration et un aspect différents.

Avantageusement, la couche de vernis (7) présente un aspect visuel et/ou une topographie de surface structurée (7'), préférentiellement imitant ou accentuant le motif du matériau naturel de la couche translucide (5) et résultant avantageusement d'un traitement spécifique subséquent, par exemple de type mécanique, tel que l'essuyage par exemple.

En réalisant un tel traitement mécanique, de type essuyage par exemple, il est possible de faire apparaitre d'éventuels motifs tels que des lignes, des noeuds, des strates ou des veines, qui s'apparentent aux caractéristiques visuelles de la matière naturelle de la couche (5).

En accord avec une réalisation pratique préférée, il peut être prévu que :
- la couche de vernis (7), transparente ou teintée translucide, présente une épaisseur comprise entre 30 µm et 80 µm, en particulier entre 40 µm et 60 µm et consiste par exemple en une laque PU solvantée, et/ou
- que la couche de primaire (6), transparente ou teintée translucide, présente une épaisseur comprise entre 5 µm et 20 µm, préférentiellement entre 10 µm et 15 µm, et consiste par exemple en un primaire d'adhésion translucide, lequel intègre éventuellement au moins un additif qui compense une perte d'une caractéristique visuelle ou tactile originelle ou ajoute une caractéristique visuelle ou tactile supplémentaire à la couche fine (5) en matériau naturel. Cette couche de primaire peut notamment être du type décrit dans le document FR 3 096 301.

De plus selon des caractéristiques avantageuses de l'invention, il peut être prévu :
- que la couche support (4) fibreuse ou sous forme de film présente une épaisseur comprise entre 100 µm et 5 mm, préférentiellement entre 0,2 mm et 0,9 mm, et est éventuellement recouverte d'une couche de résine transparente ou translucide (en cas de couche fibreuse), et/ou
- que le matériau naturel formant la fine couche continue translucide (5) soit choisi dans le groupe formé par la pierre, le verre, la céramique, le bois et un alliage d'une résine synthétique avec des éléments (par exemple inclusions du type particules, lamelles, ...) en un des matériaux naturels précités, ladite couche (5) présentant une épaisseur comprise entre 50 µm à 2 mm, préférentiellement entre 0,2 et 0,4 mm, en fonction notamment du type de matériau et de l'effet recherché en relation avec l'image lumineuse (8) projetée. En fonction d'éventuelles ablations localisées au droit des passages de lumière (10), cette couche (5) présentera une épaisseur plus ou moins importante en relation avec la zone considérée.

L'épaisseur totale cumulée de matières traversées par la lumière (au niveau des couches translucides de surface : 5, 6 et 7) est avantageusement comprise entre 10 µm et 3 mm, préférentiellement entre 50 µm et 0, 5 mm.

La couche de support fibreuse (4), qui forme une couche d'envers technique pour la couche (5) qu'elle supporte, présente des performances mécaniques suffisantes pour maintenir la cohérence de la couche composite de décor (3) lors des sollicitations générées pendant l'opération de gainage (recouvrement d'un substrat par cette couche), et/ou provoquées par les utilisateurs dans le véhicule, pour éviter que cette couche (3) de décor ne se craquèle, ne se rompt, ou ne se distende.

Cette couche (4) présente en outre avantageusement une structure en feutre, non-tissée, tissée, tricotée ou tricotée avec une maille 3D, voire un mélange de certaines de ces possibilités.

La ou les matières des fibres ou filaments constituant la couche (4) consiste(nt) par exemple en une matière du groupe : polyester PET (polytérephtalate d'éthylène), polypropylène, polyamide, matière cellulosique, coton, lin, sisal, ou un mélange de certain de ces matériaux, la couche (4) résultante étant préférentiellement opaque.

Un liant peut être présent dans la couche (4) pour lier les fibres entre elles et améliorer la résistance à la traction, ou à la déchirure, et/ou donner de la flexibilité ou souplesse (essentiellement dans le cas du feutre ou non -tissé-qui peut intégrer des fibres thermo-fusibles et/ou être soumis à un aiguilletage). Le liant peut être du latex, une résine acrylique ou analogue ou intégrer une telle substance.

L'épaisseur de la couche (4) peut aller de 50 µm à 5 mm, ou mieux de 0,1 mm à 1 mm, ou mieux encore de 0,2 mm à 0,5 mm.

Dans le cas de feutre ou de non-tissé, la couche (4) peut présenter :
- un grammage de 10 à 300 g/m² ou mieux de 50 à 250 g/m², ou mieux de 70 à 200g/m², et
- une finesse des fibres : de 1 à 10 dTex.

Dans le cas de structures tissées, la couche (4) peut présenter :
- un grammage de 50 à 500g/m², ou mieux de 70 à 200g/m², et
- une finesse des fibres : de 100 à 2000 dTex.

Enfin, dans le cas de structures tricotées, la couche (4) peut présenter :
- un grammage de 10 à 500g/m², ou mieux de 50 à 300g/m², ou mieux de 70 à 200g/m², et
- une finesse des fils : de 100 à 1000 dTex.

La couche composite (3) peut soit être préassemblée pour être ensuite rapportée sur la surface du substrat (2) à habiller, soit être réalisée directement sur ledit substrat (2) par empilage successif des couches élémentaires (4 à 7) précitées. Dans le premier cas, la solidarisation peut se faire par laminagecollage des couches (4 et 5) (avec une colle 11' -par exemple une colle PUR base aqueuse), puis application des couches de surface (6 et 7).

A la région de l'image lumineuse (8) peut être associé au moins une commande tactile, optique ou inductive, dont l'emplacement est indiqué sélectivement. Une couche ou un élément fonctionnel(le) du type capteur ou commande sensitive, de nature inductive, capacitive ou réagissant à la pression manuelle de l'utilisateur, est alors présent localement en étant intégré dans l'épaisseur de la couche composite (3).

On pourra aussi appliquer des encres, peintures (ou autre substances) translucides colorées en surface et au droit des passages de lumière, pour créer des effets colorés, uniformes ou non, des dégradés ou analogues.

Il est aussi possible de mettre en oeuvre une technique d'impression telle que décrite dans le document EP 3 268 228 pour décorer ou colorer l'aspect du matériau naturel ou réaliser les masques décrits précédemment.

L'homme du métier comprend, à la lecture de ce qui précède, que l'invention offre un large panel de variabilité d'aspects.

Ainsi, avec par exemple seulement deux bases minérales (Mica et Ardoise) il est possible de « contretyper » une multitude d'essence de pierres différentes.

De ce fait, l'utilisateur peut adapter la couleur de l'aspect « pierre » apparent à sa guise.

L'invention concerne également des procédés de fabrication d'une pièce (1) de garniture intérieure de véhicule automobile comme décrite ci-dessus.

En accord avec un premier mode de réalisation, le procédé de fabrication d'une telle pièce (1) peut consister à réaliser la couche composite d'habillage (3), puis à rapporter ladite couche composite (3) sur le substrat (2) formé séparément, par exemple par gainage ou thermogainage, après application d'une couche d'adhésion (11'), ou à former ledit substrat (2) sur la couche support (4) de ladite couche composite (3) par surmoulage, à réaliser ensuite, au moins partiellement, les passages de lumière (10) par usinage ou ablation, et enfin à intégrer la source de lumière (12) dans une cavité (2') ménagée ou creusée dans ledit substrat (2).

Selon une première variante, il peut être prévu de creuser les passages de lumière (10) en totalité, dans le substrat (2) et dans la couche composite d'habillage (3), jusqu'à l'envers de la fine couche d'habillage (5), ainsi qu'éventuellement la cavité (2') recevant la source de lumière (12). On peut dans ce cas soit partir d'un substrat (2) brut de moulage sans aucune découpe, ni creusement, soit surmouler un substrat (2) plein.

Selon une seconde variante, il peut être prévu de fournir un substrat (2) fabriqué séparément et comportant déjà des ouvertures traversantes (9) formant parties des passages de lumière (10), et éventuellement la cavité (2') recevant la source de lumière (12), venues de moulage ou creusées par usinage ou ablation (après moulage d'un substrat plein).

En accord avec un second mode de réalisation de l'invention, le procédé de fabrication d'une pièce (1) de garniture intérieure telle que décrite précédemment, consiste à réaliser séparément la couche composite d'habillage (3) et le substrat (2) avec leurs parties intégrées respectives (9, 9', 9", 9") des passages de lumière (10), puis à rapporter ladite couche composite (3) de manière ajustée sur le substrat (2), par exemple par gainage ou thermogainage, après application d'une couche d'adhésion (11') et avec mise en coïncidence précise desdites parties (9, 9', 9", 9") de passages de lumière (10) respectives, et enfin à intégrer la source de lumière (12) dans une cavité (2') formée ou ménagée dans ledit substrat (2).

Avantageusement, il peut être prévu de réaliser le substrat (2) par moulage, avec des ouvertures traversantes (9) formant parties des passages de lumière (10) intégrées et venues de moulage, ainsi que la cavité (2') pour la réception de la source de lumière (12).

En accord avec une autre caractéristique, il peut aussi être prévu de réaliser la couche composite d'habillage (3) en assemblant ses différentes couches constitutives élémentaires (4, 5, 6 et 7), puis à creuser les parties des passages de lumière (10) intégrées dans ladite couche composite (3), par exemple par ablation ou usinage.

Toujours dans le contexte du second mode de réalisation, le procédé peut consister à fabriquer la couche composite d'habillage (3) en réalisant une couche support (4) pourvues d'ouvertures traversantes (9') formant parties des passages de lumière (10), le cas échéant avec des couches d'adhésion (11, 11') appliquées de part et d'autre et comportant des découpes ou ouvertures correspondantes, puis à solidariser la fine couche translucide (5) avec ladite couche support (4), et enfin à appliquer les couches de primaire et de vernis (6 et 7).

Avantageusement, la couche support (4), ainsi qu'éventuellement les couches d'adhésion (11, 11'), est (sont) réalisée(s) par l'intermédiaire d'un masque ou gabarit comportant des ouvertures ou des découpes adéquates.

On peut relever que l'invention peut influer, pour atteindre le but fixé, et en fonction de la nature et/ou du niveau qualitatif du résultat recherché, sur un ou plusieurs des paramètres suivants :
- le contraste, en optimisant la concentration à un endroit donné et en réduisant la dégradation liée à la transmission, en limitant les fuites et pertes de lumière vers des endroits non concernés ;
- l'épaisseur de matière opaque à traverser, présent entre la source de lumière et la surface/face apparente (1') sur laquelle l'image lumineuse (8) rétroéclairée doit apparaître ;
- la qualité optique des différentes couches à traverser par la lumière (notamment 6, 7) ;
- la qualité du rayonnement lumineux émis par la source : puissance, nature, focalisation, directivité, orientation.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Pièce (1) de garniture intérieure de véhicule automobile, comprenant un substrat rigide (2) formant le corps de ladite pièce (1) et une couche composite d'habillage (3) recouvrant ledit substrat (2) pour former au moins la face apparente de ladite pièce (1), ladite couche composite (3) comprenant au moins une couche support (4), préférentiellement sous forme de film ou de nature fibreuse, tel que par exemple un textile tissé, tricoté ou non-tissé, et une fine couche translucide (5) de matériau naturel organique ou minéral, assemblée ou laminée avec la couche support (4), la face apparente (5') de ladite fine couche translucide (5) étant elle-même recouverte d'une couche (6) de primaire d'adhésion et d'une couche (7) de vernis, formant la couche superficielle, les couches élémentaires (4, 5, 6, 7) précitées qui forment ensemble par superposition la couche composite (3) autorisant une transmission lumineuse à travers ladite couche composite (3), en particulier pour la réalisation d'images lumineuses (8) par rétroéclairage, apparentes à la surface de la couche de vernis (7),
pièce de garniture (1) **caractérisée en ce que** le matériau du substrat (2) et le matériau de la couche support (4) sont de nature à bloquer la diffusion et la transmission de la lumière et **en ce que** ledit substrat (2) et la couche support (4) présentent des ouvertures traversantes (9, 9') formant par association concordante des passages de lumière (10), débouchant sur la fine couche translucide (5) et dont les sections définissent les formes des éléments constitutifs de l'image lumineuse (8).

2. Pièce (1) de garniture intérieure de véhicule automobile selon la revendication 1, **caractérisée en ce que** la fine couche translucide (5) présente, au droit des passages de lumière (10), des zones (5') ayant subi une attaque surfacique au niveau de sa face d'envers, le cas échéant d'épaisseur de matière moindre, par exemple résultant d'une ablation localisée.

3. Pièce (1) de garniture intérieure de véhicule automobile selon la revendication 1 ou 2, **caractérisée en ce que** la fine couche translucide (5) est solidarisée surfaciquement avec la couche support (4) par l'intermédiaire d'une couche d'adhésion (11), et **en ce que** la couche support (4) est éventuellement solidarisée surfaciquement avec le substrat (2) par une autre couche d'adhésion (11'), cette couche ou ces deux couches d'adhésion étant de nature à bloquer la diffusion et la transmission de la lumière et comportant des ouvertures traversantes (9", 9'") concordantes participant également aux passages de lumière (10) en formant des parties de ces derniers.

4. Pièce (1) de garniture intérieure de véhicule automobile selon l'une quelconque des revendications 1 à 3, **caractérisée en ce que** les passages de lumière (10) présentent des surfaces internes, le cas échéant traitées ou revêtues de manière adaptée, favorisant la réflexion de la lumière, et avantageusement sa propagation et éventuellement sa focalisation en direction de la fine couche translucide (5).

5. Pièce (1) de garniture intérieure de véhicule automobile selon l'une quelconque des revendications 1 à 4, **caractérisée en ce que** la au moins une source de lumière (12) destinée à générer l'image lumineuse (8) par rétroéclairage est logée dans l'épaisseur du substrat (2) ou dans une cavité formée dans ce dernier, ladite source (12) étant préférentiellement choisie parmi les lampes laser, les dispositifs à LED et les fibres optiques.

6. Pièce (1) de garniture intérieure de véhicule automobile selon l'une quelconque des revendications 1 à 5, **caractérisée en ce que en ce que** la couche de primaire (6) et/ou la couche de vernis (7) intègre(nt) une teinture, des pigments ou une substance colorante analogue, la teinture intégrée dans la couche de primaire (6) et/ou la couche de vernis (7), préférentiellement uniquement dans la couche de vernis transparent superficielle (7), présentant avantageusement une coloration similaire ou différente de la teinte du matériau naturel de la couche translucide (5), en fonction de l'effet souhaité.

7. Pièce (1) de garniture intérieure de véhicule automobile selon l'une quelconque des revendications 1 à 6, **caractérisée en ce que** la couche de vernis (7) présente un aspect visuel et/ou une topographie de surface structurée (7'), préférentiellement imitant ou accentuant le motif du matériau naturel de la couche translucide (5) et résultant avantageusement d'un traitement spécifique subséquent, par exemple de type mécanique, tel que l'essuyage.

8. Procédé de fabrication d'une pièce (1) de garniture intérieure de véhicule automobile, selon l'une quelconque des revendications 1 à 7, **caractérisé en ce qu'**il consiste à réaliser la couche composite d'habillage (3), puis à rapporter ladite couche composite (3) sur le substrat (2) formé séparément, par exemple par gainage ou thermogainage, après application d'une couche d'adhésion (11'), ou à former ledit substrat (2) sur la couche support (4) de ladite couche composite (3) par surmoulage, à réaliser ensuite, au moins partiellement, les passages de lumière (10) par usinage ou ablation, et enfin à intégrer la source de lumière (12) dans une cavité (2') ménagée ou creusée dans ledit substrat (2).

9. Procédé selon la revendication 8, **caractérisé en ce qu'**il consiste à creuser les passages de lumière (10) en totalité, dans le substrat (2) et dans la couche composite d'habillage (3), jusqu'à l'envers de la fine couche d'habillage (5), ainsi qu'éventuellement la cavité (2') recevant la source de lumière (12).

10. Procédé selon la revendication 9, **caractérisé en ce qu'**il consiste à fournir un substrat (2) fabriqué séparément et comportant déjà des ouvertures traversantes (9) formant parties des passages de lumière (10), et éventuellement la cavité (2') recevant la source de lumière (12), venues de moulage ou creusées par usinage ou ablation.

11. Procédé de fabrication d'une pièce (1) de garniture intérieure de véhicule automobile, selon l'une quelconque des revendications 1 à 7, **caractérisé en ce qu'**il consiste à réaliser séparément la couche composite d'habillage (3) et le substrat (2) avec leurs parties intégrées respectives (9, 9', 9", 9") des passages de lumière (10), puis à rapporter ladite couche composite (3) de manière ajustée sur le substrat (2), par exemple par gainage ou thermogainage, après application d'une couche d'adhésion (11') et avec mise en coïncidence précise desdites parties (9, 9', 9", 9") de passages de lumière (10) respectives, et enfin à intégrer la source de lumière (12) dans une cavité (2') formée ou ménagée dans ledit substrat (2).

12. Procédé selon la revendication 11, **caractérisé en ce qu'**il consiste à réaliser le substrat (2) par moulage, avec des ouvertures traversantes (9) formant parties des passages de lumière (10) intégrées et venues de moulage, ainsi que la cavité (2') pour la réception de la source de lumière (12).

13. Procédé selon la revendication 11 ou 12, **caractérisé en ce qu'**il consiste à réaliser la couche composite d'habillage (3) en assemblant ses différentes couches constitutives élémentaires (4, 5, 6 et 7), puis à creuser les parties des passages de lumière (10) intégrées dans ladite couche composite (3), par exemple par ablation ou usinage.

14. Procédé selon l'une quelconque des revendications 11 à 13, **caractérisé en ce qu'**il consiste à fabriquer la couche composite d'habillage (3) en réalisant une couche support (4) pourvues d'ouvertures traversantes (9') formant parties des passages de lumière (10), le cas échéant avec des couches d'adhésion (11, 11') appliquées de part et d'autre et comportant des découpes ou ouvertures correspondantes, puis à solidariser la fine couche translucide (5) avec ladite couche support (4), et enfin à appliquer les couches de primaire et de vernis (6 et 7).

15. Procédé selon la revendication 14, **caractérisé en ce que** la couche support (4), ainsi qu'éventuellement les couches d'adhésion (11, 11'), est (sont) réalisée(s) par l'intermédiaire d'un masque ou gabarit comportant des ouvertures ou des découpes adéquates.

## Patentansprüche

1. Innenverkleidungsteil (1) für ein Kraftfahrzeug, umfassend ein starres Substrat (2), das den Körper des Teils (1) bildet, und eine Verkleidungsverbundschicht (3), die das Substrat (2) bedeckt, um wenigstens die Sichtseite des Teils (1) zu bilden, wobei die Verbundschicht (3) wenigstens eine Trägerschicht (4), vorzugsweise in Form eines Films oder von faseriger Art, wie zum Beispiel ein gewebtes, gewirktes oder Vlies-Textil, und eine dünne durchscheinende Schicht (5) aus organischem oder mineralischem natürlichen Material umfasst, die mit der Trägerschicht (4) zusammengefügt oder laminiert ist, wobei die Sichtseite (5') der dünnen durchscheinenden Schicht (5) ihrerseits von einer Haftprimerschicht (6) und einer Lackschicht (7) bedeckt ist, die die Oberflächenschicht bildet, wobei die vorgenannten Elementarschichten (4, 5, 6, 7), die zusammen durch Überlagerung die Verbundschicht (3) bilden, eine Lichtübertragung durch die Verbundschicht (3) ermöglichen, insbesondere für die Erzeugung von Lichtbildern (8) durch Hinterleuchtung, die auf der Oberfläche der Lackschicht (7) sichtbar sind,
wobei das Verkleidungsteil (1) **dadurch gekennzeichnet ist, dass** das Material des Substrats (2) und das Material der Trägerschicht (4) so beschaffen sind, dass sie die Streuung und die Übertragung des Lichts blockiert, und dadurch, dass das Substrat (2) und die Trägerschicht (4) durchgehende Öffnungen (9, 9') aufweisen, die durch übereinstimmende Verbindung Lichtdurchgänge (10) bilden, die auf der dünnen durchscheinenden Schicht (5) münden und deren Teilstücke die Formen der Elemente definieren, die das Lichtbild (8) bilden.

2. Innenverkleidungsteil (1) für ein Kraftfahrzeug nach Anspruch 1, **dadurch gekennzeichnet, dass** die dünne durchscheinende Schicht (5) an den Lichtdurchgängen (10) Bereiche (5') aufweist, die an ihrer Rückseite eine Oberflächenbearbeitung erfahren haben, gegebenenfalls mit einer geringeren Materialdicke, die zum Beispiel aus einer lokalen Abtragung resultiert.

3. Innenverkleidungsteil (1) für ein Kraftfahrzeug nach Anspruch 1 oder 2, **dadurch gekennzeichnet, dass** die dünne durchscheinende Schicht (5) oberflächlich mittels einer Haftschicht (11) fest mit der Trägerschicht (4) verbunden ist, und dadurch, dass die Trägerschicht (4) eventuell oberflächlich durch eine andere Haftschicht (11') fest mit dem Substrat (2) verbunden ist, wobei diese Haftschicht oder diese zwei Haftschichten so beschaffen sind, dass sie die Streuung und die Übertragung des Lichts blockieren und übereinstimmende durchgehende Öffnungen (9", 9' ") aufweisen, die ebenfalls an den Lichtdurchgängen (10) mitwirken, indem sie Abschnitte derselben bilden.

4. Innenverkleidungsteil (1) für ein Kraftfahrzeug nach einem der Ansprüche 1 bis 3, **dadurch gekennzeichnet, dass** die Lichtdurchgänge (10) Innenflächen aufweisen, die gegebenenfalls in geeigneter Weise behandelt oder beschichtet sind, die die Reflexion des Lichts und vorteilhafterweise dessen Ausbreitung und eventuell Fokussierung in Richtung der dünnen durchscheinenden Schicht (5) begünstigen.

5. Innenverkleidungsteil (1) für ein Kraftfahrzeug nach einem der Ansprüche 1 bis 4, **dadurch gekennzeichnet, dass** die wenigstens eine Lichtquelle (12) zur Erzeugung des Lichtbilds (8) durch Hinterleuchtung in der Dicke des Substrats (2) oder in einem Hohlraum, der in diesem gebildet ist, untergebracht ist, wobei die Lichtquelle (12) vorzugsweise aus Laserlampen, LED-Vorrichtungen und optischen Fasern gewählt ist.

6. Innenverkleidungsteil (1) für ein Kraftfahrzeug nach einem der Ansprüche 1 bis 5, **dadurch gekennzeichnet, dass** die Primerschicht (6) und/oder die Lackschicht (7) eine Einfärbung, Pigmente oder einen analogen Farbstoff enthält bzw. enthalten, wobei die Einfärbung, die in die Primerschicht (6) und/oder die Lackschicht (7), vorzugsweise nur in die oberflächliche Klarlackschicht (7) integriert ist, vorzugsweise eine Färbung aufweist, die dem Farbton des natürlichen Materials der durchscheinenden Schicht (5) ähnlich oder davon verschieden ist, je nach der gewünschten Wirkung.

7. Innenverkleidungsteil (1) für ein Kraftfahrzeug nach einem der Ansprüche 1 bis 6, **dadurch gekennzeichnet, dass** die Lackschicht (7) ein Erscheinungsbild und/oder eine strukturierte Oberflächentopographie (7') aufweist, die vorzugsweise das Muster des natürlichen Materials der durchscheinenden Schicht (5) nachahmt oder betont und vorteilhafterweise aus einer spezifischen nachfolgenden Behandlung, zum Beispiel einer mechanischen wie etwa Wischen, resultiert.

8. Verfahren zur Herstellung eines Innenverkleidungsteils (1) für ein Kraftfahrzeug nach einem der Ansprüche 1 bis 7, **dadurch gekennzeichnet, dass** es darin besteht, die Verbundverkleidungsschicht (3) herzustellen, dann die Verbundschicht (3) auf das separat ausgebildete Substrat (2) aufzubringen, zum Beispiel durch Kaschieren oder Thermokaschieren nach Auftragung einer Haftschicht (11'), oder das Substrat (2) auf der Trägerschicht (4) der Verbundschicht (3) durch Aufformen zu bilden, anschließend wenigstens teilweise die Lichtdurchgänge (10) durch Bearbeitung oder Abtragung herzustellen und schließlich die Lichtquelle (12) in einen Hohlraum (2') zu integrieren, der im Substrat (2) vorgesehen oder ausgehöhlt ist.

9. Verfahren nach Anspruch 8, **dadurch gekennzeichnet, dass** es darin besteht, die Lichtdurchgänge (10) vollständig im Substrat (2) und in der Verkleidungsverbundschicht (3) bis zur Rückseite der dünnen Verkleidungsschicht (5) sowie eventuell den Hohlraum (2'), der die Lichtquelle (12) aufnimmt, auszuhöhlen.

10. Verfahren nach Anspruch 9, **dadurch gekennzeichnet, dass** es darin besteht, ein Substrat (2) bereitzustellen, das separat hergestellt ist und bereits durchgehende Öffnungen (9), die Abschnitte der Lichtdurchgänge (10) bilden, und eventuell den Hohlraum (2') aufweist, der die Lichtquelle (12) aufnimmt, die durch Formung erhalten oder durch Bearbeitung oder Abtragung ausgehöhlt sind.

11. Verfahren zur Herstellung eines Innenverkleidungsteils (1) für ein Kraftfahrzeug nach einem der Ansprüche 1 bis 7, **dadurch gekennzeichnet, dass** es darin besteht, die Verbundverkleidungsschicht (3) und das Substrat (2) mit ihren jeweiligen integrierten Abschnitten (9, 9', 9", 9") der Lichtdurchgänge (10) separat herzustellen, dann die Verbundschicht (3) passend auf das Substrat (2) aufzubringen, zum Beispiel durch Kaschieren oder Thermokaschieren nach Auftragung einer Haftschicht (11') und mit Herstellung genauer Deckungsgleichheit der Abschnitte (9, 9', 9", 9") jeweiliger Lichtdurchgänge (10), und schließlich die Lichtquelle (12) in einen Hohlraum (2') zu integrieren, der im Substrat (2) gebildet oder vorgesehen ist.

12. Verfahren nach Anspruch 11, **dadurch gekennzeichnet, dass** es darin besteht, das Substrat (2) durch Formung mit durchgehenden Öffnungen (9), die Abschnitte der Lichtdurchgänge (10) bilden, die integriert und durch Formung hergestellt sind, sowie den Hohlraum (2') für die Aufnahme der Lichtquelle (12) herzustellen.

13. Verfahren nach Anspruch 11 oder 12, **dadurch gekennzeichnet, dass** es darin besteht, die Verkleidungsverbundschicht (3) durch Zusammenfügung ihrer verschiedenen konstitutiven Elementarschichten (4, 5, 6 und 7) herzustellen, dann die Abschnitte der Lichtdurchgänge (10) auszuhöhlen, die in die Verbundschicht (3) integriert sind, zum Beispiel durch Abtragung oder Bearbeitung.

14. Verfahren nach einem der Ansprüche 11 bis 13, **dadurch gekennzeichnet, dass** es darin besteht, die Verkleidungsverbundschicht (3) durch Herstellung einer Trägerschicht (4) herzustellen, die mit durchgehenden Öffnungen (9') versehen ist, die Abschnitte der Lichtdurchgänge (10) bilden, gegebenenfalls mit Haftschichten (11, 11'), die beiderseits aufgetragen werden und entsprechende Ausschnitte oder Öffnungen aufweisen, dann die dünne durchscheinende Schicht (5) fest mit der Trägerschicht (4) zu verbinden und schließlich die Primer- und Lackschicht (6 und 7) aufzutragen.

15. Verfahren nach Anspruch 14, **dadurch gekennzeichnet, dass** die Trägerschicht (4) sowie eventuell die Haftschichten (11, 11') mittels einer Maske oder Schablone hergestellt ist (sind), die geeignete Öffnungen oder Ausschnitte aufweist.

## Claims

1. Motor vehicle inner trim component (1) comprising a rigid substrate (2) forming the body of said component (1) and a composite cladding layer (3) covering said substrate (2) so as to form at least the visible face of said component (1), said composite layer (3) comprising at least a support layer (4), preferentially in the form of a film or of fibrous nature, such as for example a woven, knitted or non-woven textile, and a thin translucent layer (5) of organic or inorganic natural material, assembled or laminated with the support layer (4), the visible face (5') of said thin translucent layer (5) itself being covered by a layer (6) of adhesion primer and a layer (7) of varnish, forming the surface layer, the elementary layers (4, 5, 6, 7) mentioned above that together form the composite layer (3) by superposition allowing light transmission through said composite layer (3), in particular for the production of light images (8) by backlighting, which are visible on the surface of the varnish layer (7),
which trim component (1) is **characterized in that** the material of the substrate (2) and the material of the support layer (4) are liable to block the diffusion and transmission of the light and **in that** said substrate (2) and the support layer (4) have through-openings (9, 9') forming, by matching, light passages (10), opening onto the thin translucent layer (5) and of which the sections define the shapes of the constituent elements of the light image (8).

2. Motor vehicle inner trim component (1) according to Claim 1, **characterized in that** the thin translucent layer (5) has, in line with the light passages (10), zones (5') that have undergone a surface attack on its reverse face, if appropriate with a smaller thickness of material, for example resulting from localised ablation.

3. Motor vehicle inner trim component (1) according to Claim 1 or 2, **characterized in that** the thin translucent layer (5) is secured at its surface to the support layer (4) via an adhesion layer (11), and **in that** the support layer (4) is optionally secured at its surface to the substrate (2) by another adhesion layer (11'), this adhesion layer or these two adhesion layers being liable to block the diffusion and transmission of the light and having matching through-openings (9", 9"') that also participate in the light passages (10) by forming parts of the latter.

4. Motor vehicle inner trim component (1) according to any one of Claims 1 to 3, **characterized in that** the light passages (10) have internal surfaces, if appropriate treated or coated in a suitable manner, promoting the reflection of the light, and advantageously its propagation and optionally its focusing in the direction of the thin translucent layer (5).

5. Motor vehicle inner trim component (1) according to any one of Claims 1 to 4, **characterized in that** the at least one light source (12) intended to generate the light image (8) by backlighting is housed in the thickness of the substrate (2) or in a cavity formed in the latter, said source (12) preferentially being chosen from among laser lamps, LED devices and optical fibres.

6. Motor vehicle inner trim component (1) according to any one of Claims 1 to 5, **characterized in that** the primer layer (6) and/or the varnish layer (7) incorporate(s) a dye, pigments or a similar colouring substance, the dye incorporated in the primer layer (6) and/or the varnish layer (7), preferably only in the surface transparent varnish layer (7), advantageously having a colouring similar or different to the hue of the natural material of the translucent layer (5), as a function of the desired effect.

7. Motor vehicle inner trim component (1) according to any one of Claims 1 to 6, **characterized in that** the varnish layer (7) has a visual appearance and/or a topography of structured surface (7'), preferentially imitating or accentuating the pattern of the natural material of the translucent layer (5) and advantageously resulting from a subsequent specific treatment, for example of the mechanical type, such as wiping.

8. Method for manufacturing a motor vehicle inner trim component (1), according to any one of Claims 1 to 7, **characterized in that** it consists in producing the composite cladding layer (3), then in attaching said composite layer (3) to the substrate (2) formed separately, for example by sheathing or thermosheathing, after application of an adhesion layer (11'), or in forming said substrate (2) on the support layer (4) of said composite layer (3) by overmoulding, next in producing, at least partially, the light passages (10) by machining or ablation, and finally in integrating the light source (12) in a cavity (2') provided or hollowed out in said substrate (2).

9. Method according to Claim 8, **characterized in that** it consists in hollowing out the light passages (10) completely, in the substrate (2) and in the composite cladding layer (3), as far as the reverse of the thin cladding layer (5), and also optionally the cavity (2') receiving the light source (12).

10. Method according to Claim 9, **characterized in that** it consists in providing a substrate (2) manufactured separately and already having through-openings (9) forming parts of the light passages (10), and optionally the cavity (2') receiving the light source (12), which are produced by moulding or hollowed out by machining or ablation.

11. Method for manufacturing a motor vehicle inner trim component (1), according to any one of Claims 1 to 7, **characterized in that** it consists in separately producing the composite cladding layer (3) and the substrate (2) with their respective integrated parts (9, 9', 9", 9"') of the light passages (10), then in attaching said composite layer (3) to the substrate (2) with a tight fit, for example by sheathing or thermosheathing, after application of an adhesion layer (11') and with precise alignment of said respective parts (9, 9', 9", 9"') of light passages (10), and finally in integrating the light source (12) in a cavity (2') formed or provided in said substrate (2).

12. Method according to Claim 11, **characterized in that** it consists in producing the substrate (2) by moulding, with through-openings (9) forming parts of the light passages (10) that are integrated and produced by moulding, and also the cavity (2') for receiving the light source (12).

13. Method according to Claim 11 or 12, **characterized in that** it consists in producing the composite cladding layer (3) by assembling its various elementary constituent layers (4, 5, 6 and 7), then in hollowing out said parts of the light passages (10) that are integrated in said composite layer (3), for example by ablation or machining.

14. Method according to any one of Claims 11 to 13, **characterized in that** it consists in manufacturing the composite cladding layer (3) by producing a support layer (4) provided with through-openings (9') forming parts of the light passages (10), if appropriate with adhesion layers (11, 11') applied on either side and having corresponding cutouts or openings, then in securing the thin translucent layer (5) to said support layer (4), and finally in applying said primer and varnish layers (6 and 7) .

15. Method according to Claim 14, **characterized in that** the support layer (4), and also optionally the adhesion layers (11, 11'), is (are) produced via a mask or template having suitable openings or cutouts.
